# EUROPEAN PATENT SPECIFICATION

(11) **EP 3 767 124 B1**
(45) Date of publication and mention of the grant of the patent: **17.04.2024**
(21) Application number: 20179493.0
(22) Date of filing: 11.06.2020
(51) Int. Cl.: F16D 48/02

(54) **ASSEMBLY FOR ACTUATING A CLUTCH IN THE DRIVE TRAIN OF A MOTOR VEHICLE**
ANORDNUNG ZUR BETÄTIGUNG EINER KUPPLUNG IM ANTRIEBSSTRANG EINES KRAFTFAHRZEUGS
ENSEMBLE D'ACTIONNEMENT D'UN EMBRAYAGE DANS LE TRAIN D'ENTRAÎNEMENT D'UN VÉHICULE À MOTEUR

(30) Priority: 28.06.2019 DE 102019117537
(43) Date of publication of application: 20.01.2021
(73) Proprietor: FTE automotive GmbH, 96106 Ebern (DE)
(72) Inventor: HEUBNER, Wilhelm, D-96106 Ebern (DE)
(74) Representative: Valeo Powertrain Systems

(56) References cited:
- EP-A1- 1 238 216
- EP-B1- 1 238 216
- WO-A1-2012/125096
- DE-A1- 10 216 002
- DE-A1-102004 019 326
- DE-A1-102014 216 648
- DE-A1-102016 214 932
- US-A1- 2008 078 173
- US-A1- 2016 108 977

## Description

The invention relates to an assembly for actuating a clutch in the drive train of a motor vehicle, wherein the clutch is arranged in a transmission case.

The clutch is, in particular, a wet clutch, for the actuation of which at least one piston integrated into the clutch and rotating with the clutch is provided. By virtue of the design, the supply of hydraulic fluid for the actuation of the clutch is not leak tight, however; there are considerable leakage flows, some being virtually unavoidable and some being provided deliberately in order to cool the rotating seals etc.

It is the object of the invention to provide an assembly for actuating a clutch, by means of which the desired hydraulic pressure for the actuation of the clutch can be made available very precisely and yet with little expenditure of energy.

To achieve this object, the invention provides an assembly for actuating a clutch in the drive train of a motor vehicle, having a pump unit, which has a hydraulic pump, at least one solenoid valve and a pressure outlet for actuating the clutch, a transmission case, in which a sump for hydraulic fluid is provided, and having a lubricant pump, which supplies a lubricant circuit of the clutch or of the transmission with hydraulic fluid, which is drawn in from the sump of the transmission case, wherein there is a branch from the lubricant circuit to the pump unit. The invention is based on the underlying concept of using the lubricant pump which is usually present in any case in such a clutch to supply the hydraulic pump of the pump unit as well. This ensures that said pump has sufficient hydraulic fluid available under all circumstances.

According to one embodiment of the invention, the hydraulic pump of the pump unit can be supplied directly by the branch. In other words: the lubricant pump pumps hydraulic fluid directly to the suction side of the hydraulic pump. This ensures that there is sufficient hydraulic fluid available for the hydraulic pump even in unfavourable operating conditions, e.g. a cold start.

According to another embodiment of the invention, it is envisaged that the hydraulic pump of the pump unit has a reservoir, from which it draws fluid, and that the branch leads to the reservoir. In this configuration, the pump unit is fundamentally an autonomous unit, wherein the lubricant pump with the branch to the hydraulic pump is used to compensate for any leakage loss in the actuating circuit supplied by the pump unit.

The reservoir can also be formed by a correspondingly shaped cavity in the transmission and can be closed by the attachment of the pump unit.

The branch which leads to the reservoir can be embodied without open-loop or closed-loop control components if an overflow leading to the sump or back into the lubricating system is provided on the reservoir. Thus, the reservoir is always kept completely filled.

A restrictor can be provided in the overflow, thus ensuring that a certain admission pressure is maintained in the reservoir and hence also on the suction side of the hydraulic pump. This is comparable with the situation in the first embodiment, in which the suction side of the hydraulic pump is supplied directly from the branch.

A filter is preferably arranged between the sump and a suction port of the lubricant pump, thus ensuring that no contaminants that accumulate in the sump can enter the actuating circuit.

The nominal flow rate through the branch is preferably significantly less than the nominal delivery volume of the lubricant pump, thus ensuring that the main function of the lubricant pump, namely supplying the lubricant circuit, is not prejudiced by the presence of the branch.

Another embodiment envisages passing the entire oil flow through the reservoir of the pump unit and then passing it either directly or via an intermediate reservoir to the lubricating system. The intermediate reservoir offers the advantage that a dry sump system can be formed, which offers advantages in terms of efficiency.

The pump unit can have at least two pressure outlets and a solenoid valve for each of the pressure outlets, thus enabling the hydraulic pressure of the individual pressure outlets to be controlled very precisely and independently of one another.

The hydraulic pump of the pump unit can be a roller cell pump, which combines a high reliability with good efficiency.

The invention will be described below on the basis of various embodiments, which are illustrated in the appended drawings. In these drawings:
- Figure 1 shows schematically an assembly according to the invention in a schematically illustrated clutch;
- Figure 2 shows schematically a first embodiment of the assembly according to the invention;
- Figure 3A shows schematically a second embodiment of an assembly according to the invention;
- Figure 3B shows schematically a variant of the second embodiment shown in Figure 3A;
- Figure 3C shows schematically a variant of the second embodiment shown in Figure 3B;
- Figure 4 shows schematically a third embodiment of an assembly according to the invention;
- Figure 5 shows schematically a fourth embodiment of an assembly according to the invention;
- Figure 6 shows schematically a fifth embodiment of an assembly according to the invention;
- Figure 7 shows schematically a sixth embodiment of an assembly according to the invention;
- Figure 8 shows schematically a seventh embodiment of an assembly according to the invention; and
- Figure 9 shows schematically an eighth embodiment of an assembly according to the invention.

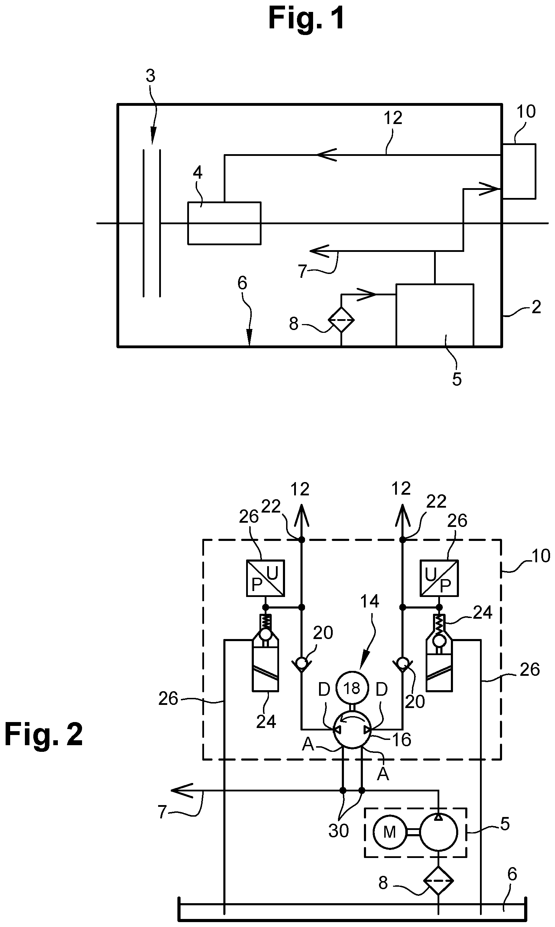

Figure 1 shows schematically a transmission case 2, in which a clutch 3 is arranged. This can be actuated, e.g. closed, by means of an actuating element 4.

The actuating element can be, in particular, a piston/cylinder mechanism.

The clutch 3 is preferably a wet clutch.

Arranged in the transmission case 2 is a lubricant pump 5, which draws in hydraulic fluid from a sump 6 in the transmission case 2 and uses it to supply a lubricant circuit 7, illustrated here only schematically. The hydraulic fluid in the lubricant circuit can be used to supply bearings, seals etc. with hydraulic fluid.

A filter 8 is arranged between the sump 6 and a suction port of the lubricant pump 5, thereby ensuring that it is impossible for any contaminants in the hydraulic fluid that accumulate in the sump 6 to get into the lubricant circuit 7.

The actuating element 4 of the clutch 3 is also supplied with hydraulic fluid. This comes from a pump unit 10, which has at least one pressure outlet connected to the actuating element 4 via a hydraulic line 12. A first embodiment of the pump unit, together with the lubricant pump, is shown in Figure 2. The same reference signs are used for the components known from Figure 1, and, to this extent, attention is drawn to the above explanations.

The pump unit 10 has a hydraulic pump 14, which has a pump body 16 and a drive motor 18. The hydraulic pump 14 is a roller cell pump with two mutually separate intake ports A and two separate pressure outlets D.

The drive motor 18 is a brushless electric motor.

Each of the pressure outlets D of the hydraulic pump 14 leads via a check valve 20 to a pressure port 22 of the pump unit, to which the hydraulic line 12 is then connected.

The pressure at each pressure port 22 can be subject to closed-loop or open-loop control by means of a solenoid valve 24 (in particular a proportional valve), which has a pressure sensor 26. A return line 28 of each solenoid valve 24 leads to the sump 6.

The lubricant circuit 7 supplied by the lubricant pump 5 is provided with two branches 30, which lead directly to the intake ports A of the hydraulic pump 14. As soon as the lubricant pump 5 is running, hydraulic fluid, which is under an admission pressure, is therefore supplied to the intake ports of the hydraulic pump 14.

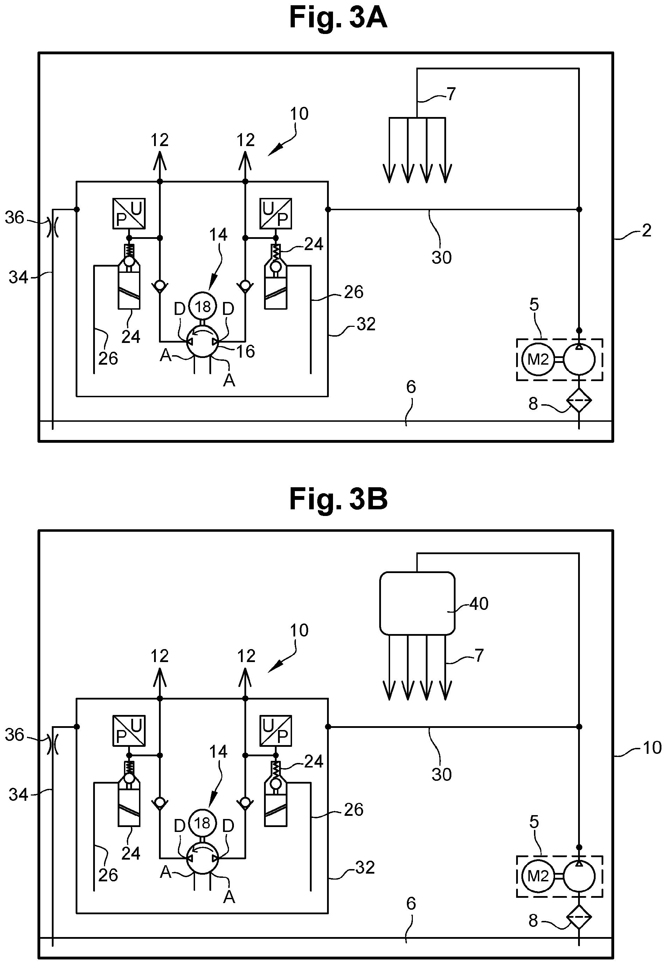

A second embodiment is shown in detail in Figure 3A. The same reference signs are used for the components known from the preceding embodiment, and, to this extent, attention is drawn to the above explanations.

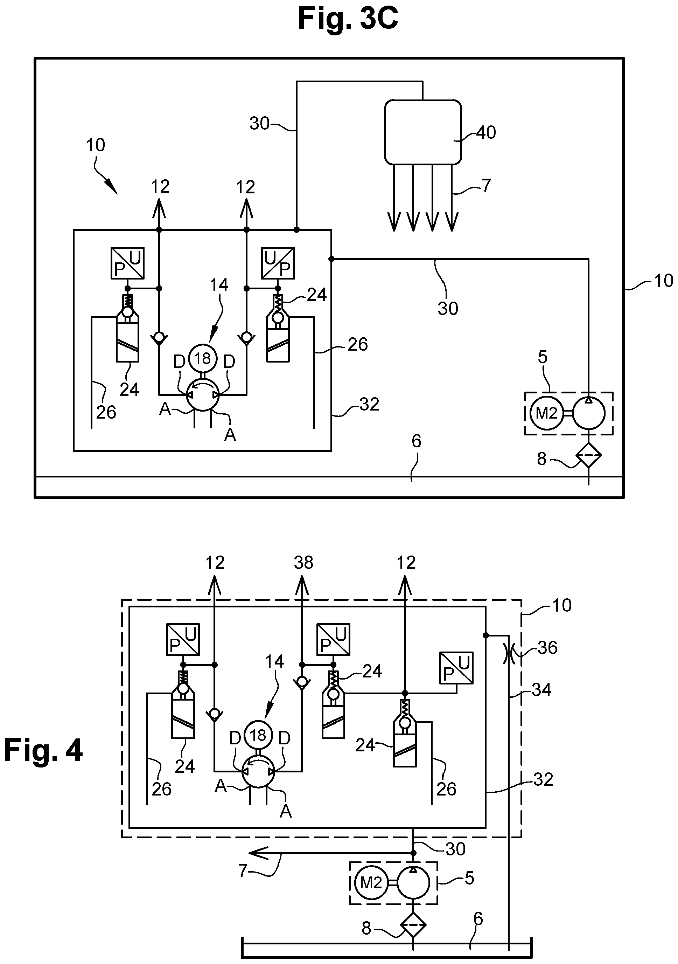

The difference between the embodiment shown in Figure 2 and the embodiment shown in Figure 3 consists in that the pump unit 10 in Figure 3 has an integral reservoir 32. This is filled from the branch 30.

The reservoir 32 also has an overflow line 34, which leads to the sump 6. A restrictor 36 is arranged in the overflow line 34.

The solenoid valves 24 are preferably arranged within the reservoir 32, ensuring that there is a flow of hydraulic fluid around their coils.

Figure 3B shows in detail a variant of the second embodiment shown in Figure 3A. The same reference signs are used for the components known from the preceding embodiments, and, to this extent, attention is drawn to the above explanations.

The difference between the embodiment shown in Figure 3A and the variant in Figure 3A consists in that an intermediate reservoir 40, which is arranged between the outlet of the lubricant pump 5 and the lubricant circuit 7, is provided in Figure 3B.

The intermediate reservoir is dimensioned in such a way that, on the one hand, it allows the transmission to be operated with dry sump lubrication but, on the other hand, it provides increased security against failure in that it runs empty if the lubricant pump 5 fails, with the result that the level of hydraulic fluid in the sump 6 rises to such an extent that there is a transition from dry sump operation to operation with splash lubrication.

Figure 3C shows another variant of the variant shown in Figure 3B. The same reference signs are used for the components known from the preceding embodiments and variants, and, to this extent, attention is drawn to the above explanations.

The difference between the variant shown in Figure 3B and the variant shown in Figure 3C consists in that, in Figure 3C, the intermediate reservoir 40 is filled via the reservoir 32 of the pump unit. The entire volume flow of the lubricant pump thus passes initially into the reservoir 32, from which a lubricant flow flows off to the intermediate reservoir 40.

Another embodiment is shown in Figure 4. The same reference signs are used for the components known from the preceding embodiments, and, to this extent, attention is drawn to the above explanations.

The difference between the embodiment shown in Figure 4 and the embodiment in Figure 3 is that, in the embodiment in Figure 4, more than two pressure outlets are provided. By means of the cascaded arrangement of solenoid valves 24, which is shown on the right-hand side, it is possible to switch a pressure outlet 38, which is provided for the actuation of a parking lock of an automatic transmission, for example.

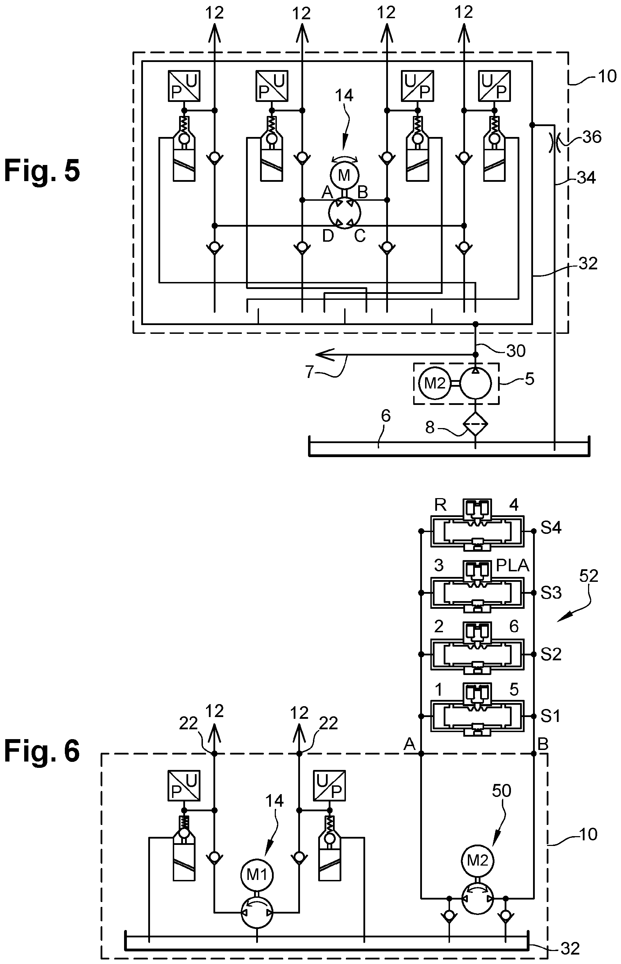

Another embodiment is shown in Figure 5. The same reference signs are used for the components known from the preceding embodiments, and, to this extent, attention is drawn to the above explanations.

The difference between the embodiment in Figure 5 and the embodiment in Figures 3 and 4 consists in that, in the embodiment in Figure 5, the hydraulic pump 14 has four ports, of which in each case two are operated as suction ports and two are operated as pressure ports, depending on the direction of rotation. Overall, it is possible in this way to supply four pressure ports with hydraulic fluid with little effort.

In this embodiment too, a reservoir 32 is provided as an integral part of the pump unit. This is supplied with hydraulic fluid by the lubricant pump 5 via the branch 30. The excess flows back to the sump 6 via the overflow line 34 and the restrictor 36.

Another embodiment of the pump unit is shown in Figure 6. The same reference signs are used for the components known from the preceding embodiment, and, to this extent, attention is drawn to the above explanations.

The difference between the embodiment in Figure 6 and the embodiment in Figures 3 to 5 consists in that, in the pump unit of Figure 6, not only is the hydraulic pump 14, which supplies the two pressure ports 22 but also a further hydraulic pump 50, which can supply an assembly 52 having shift actuators with hydraulic fluid, are provided. The shift actuators can be used, for example, to engage and disengage gear stages of a shift transmission.

In this embodiment too, the reservoir 32 is filled by the lubricant pump 5 via the branch 30.

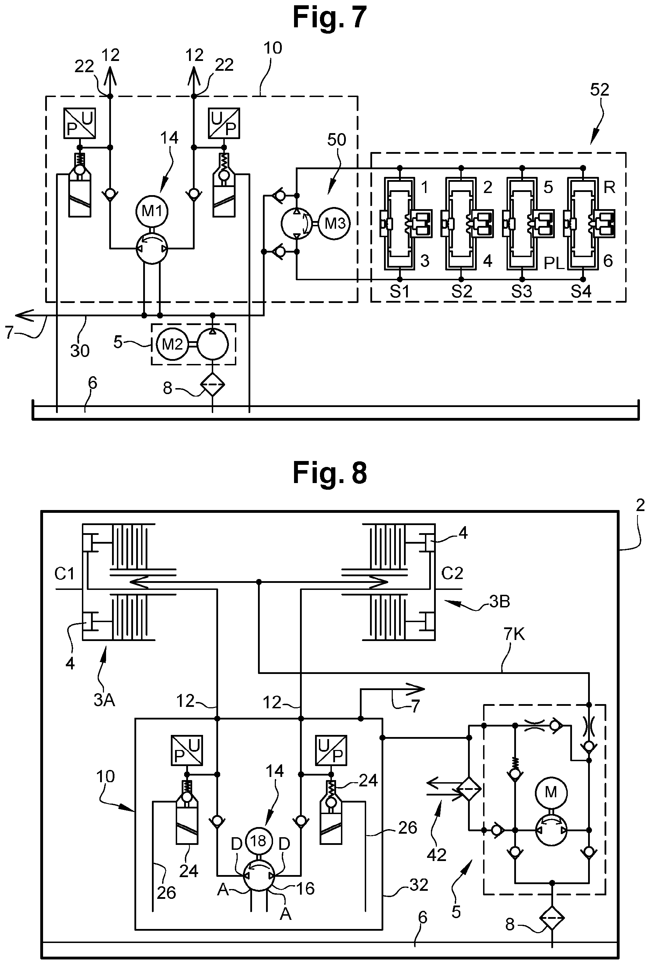

Another embodiment is shown in Figure 7. The same reference signs are used for the components known from the preceding embodiments, and, to this extent, attention is drawn to the above explanations.

The difference between the embodiment in Figure 7 and the embodiment in Figure 6 is that, in the embodiment in Figure 7, there is no reservoir 32. Instead, the two hydraulic pumps 14, 50 are supplied with hydraulic fluid directly by the branch 30 of the lubricant pump 5. To this extent, this configuration corresponds to the embodiment shown in Figure 2.

Another embodiment is shown in Figure 8. The same reference signs are used for the components known from the preceding embodiments and variants, and, to this extent, attention is drawn to the above explanations.

The significant difference between the embodiment in Figure 8 and the preceding embodiments is that, in the embodiment in Figure 8, the lubricant pump 5 can be operated in reverse. Depending on the direction of rotation, either only the reservoir 32 of the pump unit or both the reservoir 32 and the two clutches 3A, 3B (see the lubricant circuit 7K for the clutches) is/are supplied with hydraulic fluid.

Here, the normal lubricant circuit 7 branches off from the reservoir 32 of the pump unit 10.

If both the cooling system of the clutches 3A, 3B and the lubricant circuit are supplied simultaneously, around 1/3 of the volume flow enters lubricant circuit 7, and 2/3 enters lubricant circuit 7K.

A branch 42 leading to an oil cooler is furthermore provided in this embodiment.

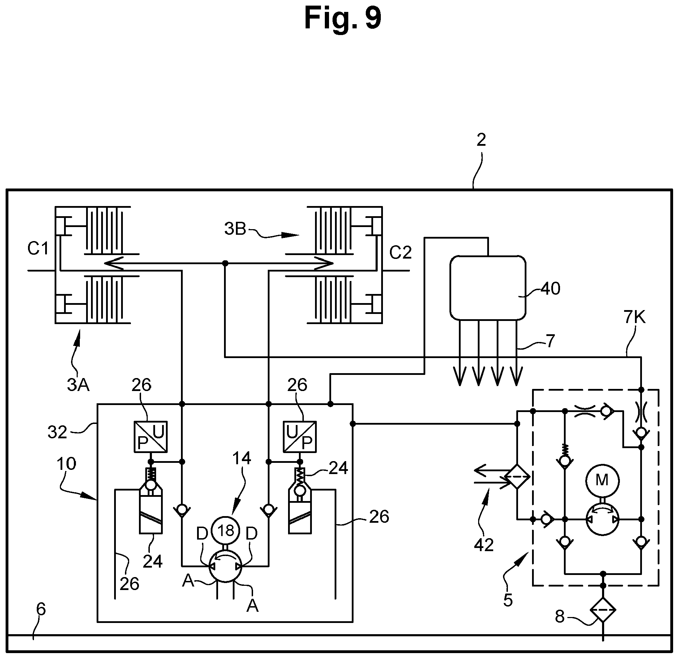

Another embodiment is shown in Figure 9. The same reference signs are used for the components known from the preceding embodiments and variants, and, to this extent, attention is drawn to the above explanations.

The difference between the embodiment shown in Figure 9 and the embodiment in Figure 8 is that, in the embodiment in Figure 9, the intermediate reservoir 40 already known from Figure 3B is used. This enables the transmission to be operated with dry sump lubrication.

## Claims

1. Assembly for actuating a clutch (3) in the drive train of a motor vehicle, having a pump unit (10), which has a hydraulic pump (14), at least one solenoid valve (24) and a pressure outlet (22) for actuating the clutch (3), **characterized in that** the assembly further comprises a transmission case (2), in which a sump (6) for hydraulic fluid is provided, and a lubricant pump (5), which supplies a lubricant circuit (7) of the clutch (3) with hydraulic fluid, which is drawn in from the sump (6) of the transmission case (2), wherein there is a branch (30) from the lubricant circuit (7) to the pump unit (10) such that the lubricant pump (5) to supply with hydraulic fluid the hydraulic pump (14) of the pump unit (10).

2. Assembly according to claim 1, **characterized in that** the hydraulic pump (14) of the pump unit (10) is supplied directly by the branch (30).

3. Assembly according to claim 1, **characterized in that** the hydraulic pump (14) of the pump unit (10) has a reservoir (32), from which it draws fluid, and **in that** the branch (30) leads to the reservoir (32).

4. Assembly according to claim 3, **characterized in that** the reservoir (32) has an overflow line (34), which leads to the sump (6).

5. Assembly according to claim 4, **characterized in that** a restrictor (36) is provided in the overflow line (34).

6. Assembly according to any of claims 3 to 5, **characterized in that** the reservoir has a volume such that a dry sump lubrication system is formed.

7. Assembly according to any of the preceding claims, **characterized in that** a filter (8) is arranged between the sump (6) and a suction port of the lubricant pump (5).

8. Assembly according to any of the preceding claims, **characterized in that** the nominal flow rate through the branch (30) is of the order of 1 to 10% of the nominal delivery volume of the lubricant pump (5).

9. Assembly according to any of the preceding claims, **characterized in that** the pump unit (10) has at least two pressure ports (22) and a solenoid valve (24) for each of the pressure ports (22).

10. Assembly according to any of the preceding claims, **characterized in that** the hydraulic pump (14; 50) is a roller cell pump.

## Patentansprüche

1. Anordnung zur Betätigung einer Kupplung (3) im Antriebsstrang eines Kraftfahrzeugs, eine Pumpeneinheit (10) aufweisend, die eine hydraulische Pumpe (14), zumindest ein Magnetventil (24) und einen Druckauslass (22) zum Betätigen der Kupplung (3) aufweist, **dadurch gekennzeichnet, dass** die Anordnung ferner Folgendes umfasst: ein Getriebegehäuse (2), in dem ein Sumpf (6) für Hydraulikfluid bereitgestellt ist, und eine Schmiermittelpumpe (5), die einem Schmiermittelkreis (7) der Kupplung (3) Hydraulikfluid zuführt, die aus dem Sumpf (6) des Getriebegehäuses (2) angesaugt wird, wobei es einen Abzweig (30) vom Schmiermittelkreis (7) zur Pumpeneinheit (10) gibt, sodass die Schmiermittelpumpe (5) der Hydraulikpumpe (14) der Pumpeneinheit (10) Hydraulikfluid zuführt.

2. Anordnung nach Anspruch 1, **dadurch gekennzeichnet, dass** die hydraulische Pumpe (14) der Pumpeneinheit (10) direkt durch den Abzweig (30) versorgt wird.

3. Anordnung nach Anspruch 1, **dadurch gekennzeichnet, dass** die hydraulische Pumpe (14) der Pumpeneinheit (10) einen Vorratsbehälter (32) aufweist, aus dem sie Fluid zieht, und dadurch, dass der Abzweig (30) zum Vorratsbehälter (32) führt.

4. Anordnung nach Anspruch 3, **dadurch gekennzeichnet, dass** der Vorratsbehälter (32) eine Überlaufleitung (34) aufweist, die in den Sumpf (6) führt.

5. Anordnung nach Anspruch 4, **dadurch gekennzeichnet, dass** ein Begrenzer (36) in der Überlaufleitung (34) bereitgestellt ist.

6. Anordnung nach einem der Ansprüche 3 bis 5, **dadurch gekennzeichnet, dass** der Vorratsbehälter ein Volumen aufweist, sodass ein trockenes Sumpfschmiersystem gebildet wird.

7. Anordnung nach einem der vorhergehenden Ansprüche, **dadurch gekennzeichnet, dass** ein Filter (8) zwischen dem Sumpf (6) und einer Ansaugöffnung der Schmiermittelpumpe (5) amgeordnet ist.

8. Anordnung nach einem der vorhergehenden Ansprüche, **dadurch gekennzeichnet, dass** die Nenndurchflussrate durch den Abzweig (30) in der Größenordnung von 1 bis 10 % des Nennfördervolumens der Schmiermittelpumpe (5) ist.

9. Anordnung nach einem der vorhergehenden Ansprüche, **dadurch gekennzeichnet, dass** die Pumpeneinheit (10) mindestens zwei Druckanschlüsse (22) und ein Magnetventil (24) für jeden der Druckanschlüsse (22) aufweist.

10. Anordnung nach einem der vorhergehenden Ansprüche, **dadurch gekennzeichnet, dass** die hydraulische Pumpe (14; 50) eine Rollenzellenpumpe ist.

## Revendications

1. Ensemble d'actionnement d'un embrayage (3) dans le train d'entraînement d'un véhicule à moteur, ayant une unité pompe (10), qui a une pompe hydraulique (14), au moins une électrovanne (24) et une sortie de pression (22) pour l'actionnement de l'embrayage (3), **caractérisé en ce que** l'ensemble comprend en outre un carter de boîte de vitesses (2), dans lequel est placé un carter (6) pour le fluide hydraulique, et une pompe à lubrifiant (5), qui alimente un circuit de lubrifiant (7) de l'embrayage (3) en fluide hydraulique, qui est aspiré à partir du carter (6) du carter de boîte de vitesses (2), une dérivation (30) existant du circuit de lubrifiant (7) vers l'unité pompe (10) de sorte que la pompe à lubrifiant (5) alimente en fluide hydraulique la pompe hydraulique (14) de l'unité pompe (10).

2. Ensemble selon la revendication 1, **caractérisé en ce que** la pompe hydraulique (14) de l'unité pompe (10) est alimentée directement par la dérivation (30).

3. Ensemble selon la revendication 1, **caractérisé en ce que** la pompe hydraulique (14) de l'unité pompe (10) a un réservoir (32) duquel elle aspire du fluide, et **en ce que** la dérivation (30) mène au réservoir (32).

4. Ensemble selon la revendication 3, **caractérisé en ce que** le réservoir (32) a une conduite de trop-plein (34), qui mène au carter (6).

5. Ensemble selon la revendication 4, **caractérisé en ce qu'**un dispositif de restriction (36) est fourni dans la conduite de trop-plein (34).

6. Ensemble selon l'une quelconque des revendications 3 à 5, **caractérisé en ce que** le réservoir a un volume tel qu'il forme un système de lubrification à carter sec.

7. Ensemble selon l'une quelconque des revendications précédentes, **caractérisé en ce qu'**un filtre (8) est disposé entre le carter (6) et un orifice d'aspiration de la pompe à lubrifiant (5).

8. Ensemble selon l'une quelconque des revendications précédentes, **caractérisé en ce que** le débit nominal à travers la dérivation (30) est de l'ordre de 1 à 10 % du volume d'alimentation nominal de la pompe à lubrifiant (5) .

9. Ensemble selon l'une quelconque des revendications précédentes, **caractérisé en ce que** l'unité pompe (10) a au moins deux orifices de pression (22) et une électrovanne (24) pour chacun des orifices de pression (22) .

10. Ensemble selon l'une quelconque des revendications précédentes, **caractérisé en ce que** la pompe hydraulique (14 ; 50) est une pompe à cellules à rouleaux.
